# EUROPEAN PATENT APPLICATION

(11) **EP 4 296 858 A1**
(43) Date of publication of application: **27.12.2023**
(21) Application number: 22783949.5
(22) Date of filing: 31.03.2022
(51) Int. Cl.: G06F 9/54

(54) **APPLICATION PROGRAM STATE SENSING METHOD, RELATED DEVICE AND RELATED SYSTEM**

(30) Priority: 09.04.2021 CN 202110385231
(71) Applicant: Huawei Technologies Co., Ltd., Shenzhen, Guangdong 518129 (CN)
(72) Inventor: DING, Ran, Shenzhen, Guangdong 518129 (CN); LI, Hongxi, Shenzhen, Guangdong 518129 (CN)
(74) Representative: Pfenning, Meinig & Partner mbB
(86) International application number: PCT/CN2022/084484
(87) International publication number: WO 2022/213882

(57) **Abstract**

An application status awareness method, a related device, and a related system are provided. The method includes: querying a running status of an application on a first device before the first device enters a sleep state, and storing application status information in a memory. The application status information includes a correspondence between an identifier of a first application and a running status of the first application. The first device sends the application status information to a second device. The second device receives the application status information sent by the first device, and stores the application status information. When the first device and the second device are in a sleep state, the first device and the second device may query the stored application status information, to determine the running status of the first application.

## Description

This application claims priority to Chinese Patent Application No. 202110385231.9, filed with the China National Intellectual Property Administration on April 9, 2021 and entitled "APPLICATION STATUS AWARENESS METHOD, RELATED DEVICE, AND RELATED SYSTEM", which is incorporated herein by reference in its entirety.

### TECHNICAL FIELD

This application relates to the field of computer technologies, and in particular, to an application status awareness method, a related device, and a related system.

### BACKGROUND

On a hyper terminal, a same application is installed on a plurality of devices. When the application is executed on the plurality of devices, the devices need to be aware of a running status of the application in real time. For example, the devices broadcast the running status of the application to each other, or the devices query the running status of the application from each other.

However, a device on which the application is located is not online in real time, and a case in which the device is in a sleep state exists. After the device enters the sleep state, if the running status of the application needs to be synchronized, a main processor needs to be frequently woken up to query the running status of the application and perform communication. For example, if a device 2 is in the sleep state, when a device 1 queries, from the device 2, a running status of a specific application in the device 2, the device 2 needs to wake up a main processor to query a current running status of the application, and then send the current running status to the device 1. For another example, if the device 2 that is in the sleep state needs to regularly broadcast a running status of a specific application, the main processor needs to be regularly woken up from the sleep state to query the running status of the application, and then broadcast the running status.

In this case, to synchronize a running status of an application between devices, a device that is in a sleep state needs to frequently wake up a main processor of the device to query the current running status of the application, and invoke a communication interface to send the current running status. This causes great power consumption overheads.

### SUMMARY

This application provides an application status awareness method, a related device, and a related system, to reduce power consumption of devices when a running status of an application is synchronized between the devices.

According to a first aspect, an embodiment of this application provides an application status awareness method. The method includes: A first device queries a running status of a first application on the first device before the first device enters a sleep state; the first device stores application status information, where the application status information includes a correspondence between an identifier of the first application and the running status of the first application; the first device sends the application status information to a second device when the first device is in the sleep state, to enable the second device to determine the running status of the first application.

According to the method provided in the first aspect, the first device stores the application status information before the first device enters the sleep state, so that when the first device needs to query the running status of the first application, the first device does not need to query a current running status of the first application by using a main processor, and only needs to query the stored application status information to obtain the running status of the first application. This reduces power consumption overheads of the first device. The stored application status information is sent to the second device after the first device enters the sleep state, so that when the second device needs to query the running status of the first application on the first device, the second device only needs to directly query the application status information sent by the first device, and does not need to send a request for querying the running status of the first application to the first device. This greatly reduces power consumption overheads of the first device and the second device.

With reference to the first aspect, in some embodiments, the first device includes the main processor and an auxiliary processor. That a first device queries a running status of a first application on the first device before the first device enters a sleep state specifically includes: The auxiliary processor queries the running status of the first application on the first device before the main processor enters a sleep state. That the first device stores application status information specifically includes: The main processor stores the application status information. That the first device sends the application status information to a second device when the first device is in the sleep state, to enable the second device to determine the running status of the first application specifically includes: The auxiliary processor sends the application status information to the second device before the main processor enters the sleep state, to enable the second device to determine the running status of the first application.

In this embodiment of this application, the auxiliary processor sends the application status information to the second device when the main processor is in the sleep state, and there is no need to wake up the main processor to send the application status information. In addition, power consumption of the auxiliary processor is far less than power consumption of the main processor. Therefore, power consumption overheads of the second device are reduced.

With reference to the first aspect, in some embodiments, the method further includes: The first device updates the stored application status information at a first preset moment before the first device enters the sleep state.

In this embodiment of this application, the first device updates the stored application status information at the first preset moment before the first device enters the sleep state. It is ensured that when the first device enters the sleep state, the application status information stored in the first device is the running status corresponding to the first application on the first device. This prevents another device from being misled because of a fact that when the first device broadcasts the application status information, a running status that is of an application and that is stored in the first device is not a latest state.

With reference to the first aspect, in some embodiments, the running status of the application includes at least a sleep state and an active state.

With reference to the first aspect, in some embodiments, the application status information includes first application code. The first application code includes first sub-code and second sub-code. The first sub-code indicates the running status of the first application. The second sub-code indicates the first application.

With reference to the first aspect, in some embodiments, the application status information includes an application status table. The application status table includes the correspondence between the identifier of the first application and the running status of the first application.

With reference to the first aspect, in some embodiments, the application status table further includes a first status bit. The first status bit includes a first sub-status bit. The first sub-status bit corresponds to the first application.

With reference to the first aspect, in some embodiments, the method further includes: The first device sends the application status information to the second device before the first device enters the sleep state.

With reference to the first aspect, in some embodiments, that the first device sends the application status information to the second device when the first device is in the sleep state specifically includes: The first device broadcasts the application status information to the second device at intervals of preset duration when the first device is in the sleep state.

With reference to the first aspect, in some embodiments, the method further includes: In response to a request of the second device for querying the running status of the first application, the first device queries the stored application status information to obtain a status of the first application; and the first device sends the running status of the first application to the second device.

According to a second aspect, an embodiment of this application provides an application status awareness method. The method includes: A second device receives application status information sent by a first device, where the application status information includes a correspondence between an identifier of a first application on the first device and a running status of the first application; the second device stores the application status information; and the second device queries the stored application status information when the second device is in a sleep state, to determine the running status of the first application.

According to the method provided in the second aspect, before the second device enters the sleep state, the second device may receive and store the application status information sent by the first device. When the second device is in the sleep state, and the second device needs to query the status information of the first application on the first device, the second device only needs to query the application status information that is stored in the second device and that is sent by the first device, and does not need to initiate a query about the running status of the first application to the first device. This greatly reduces power consumption overheads of the second device.

With reference to the second aspect, in some embodiments, the second device includes a main processor and an auxiliary processor. That a second device receives application status information sent by a first device specifically includes: The main processor receives the application status information sent by the first device. That the second device stores the application status information specifically includes: The main processor stores the application status information. That the second device queries the stored application status information, to determine the running status of the first application specifically includes: The auxiliary processor queries the stored application status information, to determine the running status of the first application.

With reference to the second aspect, in some embodiments, the method further includes: When the second device is in the sleep state, the second device receives application status information that is of the first device and that is broadcast by the first device; and the second device updates, based on the application status information of the first device, the application status information that is of the first device and that is stored in the second device.

With reference to the second aspect, in some embodiments, the method further includes: The second device sends a request for querying the running status of the first application to the first device when the second device is in the sleep state.

According to a third aspect, an embodiment of this application provides a device, where the device includes one or more processors and a memory. The memory is coupled to the one or more processors and is configured to store computer program code. The computer program code includes computer instructions. The one or more processors invoke the computer instructions to enable the device to perform the following operations:
before the device enters a sleep state, querying a running status of a first application installed on the device; storing application status information, where the application status information includes a correspondence between an identifier of the first application and the running status of the first application; and sending the application status information to a second device when the device is in the sleep state, to enable the second device to determine the running status of the first application.

According to the device provided in the third aspect, the application status information may be stored before the device enters the sleep state, so that when the device needs to query the running status of the first application, the device does not need to query a current running status of the first application by using a main processor, and only needs to query the stored application status information to obtain the running status of the first application. This reduces power consumption overheads of the device. The stored application status information is sent to the second device after the device enters the sleep state, so that when the second device needs to query the running status of the first application on the device, the second device only needs to directly query the application status information sent by the device, and does not need to send a request for querying the running status of the first application to the device. This greatly reduces power consumption overheads of the device and the second device.

With reference to the third aspect, in some embodiments, the one or more processors include the main processor and an auxiliary processor. The main processor is specifically configured to invoke the computer instructions to enable the device to perform the following operations: before the main processor enters a sleep state, querying the running status of the first application installed on a first device; and storing the application status information, where the application status information includes the correspondence between the identifier of the first application and the running status of the first application. The auxiliary processor is specifically configured to invoke the computer instructions to enable the device to perform the following operation: sending the application status information to the second device when the main processor is in the sleep state, to enable the second device to determine the running status of the first application.

With reference to the third aspect, in some embodiments, the one or more processors are specifically configured to invoke the computer instructions to enable the device to perform the following operation: updating the stored application status information at a first preset moment before the device enters the sleep state.

With reference to the third aspect, in some embodiments, a running status of an application includes at least a sleep state and an active state.

With reference to the third aspect, in some embodiments, the application status information includes first application code. The first application code includes first sub-code and second sub-code. The first sub-code indicates the running status of the first application. The second sub-code indicates the first application.

With reference to the third aspect, in some embodiments, the application status information includes an application status table. The application status table includes the correspondence between the identifier of the first application and the running status of the first application.

With reference to the third aspect, in some embodiments, the application status table further includes a first status bit. The first status bit includes third sub-code. The third sub-code corresponds to the first application.

With reference to the third aspect, in some embodiments, the one or more processors are specifically configured to invoke the computer instructions to enable the device to perform the following operation: sending the application status information to the second device before the device enters the sleep state.

With reference to the third aspect, in some embodiments, the one or more processors are specifically configured to invoke the computer instructions to enable the device to perform the following operation: broadcasting the application status information to the second device at intervals of preset duration.

With reference to the third aspect, in some embodiments, the one or more processors are specifically configured to invoke the computer instructions to enable the device to perform the following operations: in response to a request of the second device for querying a status of the first application, querying the stored application status information to obtain the running status of the first application; and sending the running status of the first application to the second device.

According to a fourth aspect, an embodiment of this application provides a device. The device includes one or more processors and a memory. The memory is coupled to the one or more processors and is configured to store computer program code. The computer program code includes computer instructions. The one or more processors are configured to invoke the computer instructions to enable the device to perform the following operations: receiving application status information sent by a first device, where the application status information includes a correspondence between an identifier of a first application on the first device and a running status of the first application; storing the application status information; and querying the stored application status information when the device is in a sleep state, to determine the running status of the first application.

With reference to the fourth aspect, in some embodiments, the one or more processors include a main processor and an auxiliary processor. The main processor is specifically configured to invoke the computer instructions to enable the device to perform the following operations: before the main processor enters a sleep state, receiving the application status information sent by the first device, where the application status information includes the correspondence between the identifier of the first application installed in the first device and the running status of the first application; and storing the application status information. The auxiliary processor is specifically configured to invoke the computer instructions to enable the device to perform the following operation: querying the stored application status information when the main processor is in the sleep state, to determine the running status of the first application.

With reference to the fourth aspect, in some embodiments, the one or more processors are specifically configured to invoke the computer instructions to enable the device to perform the following operations: when the device is in the sleep state, receiving application status information that is of the first device and that is broadcast by the first device; and updating, based on the application status information of the first device, the application status information that is of the first device and that is stored in the device.

With reference to the fourth aspect, in some embodiments, the one or more processors are specifically configured to invoke the computer instructions to enable the device to perform the following operation: sending a request for querying the running status of the first application to the first device when the device is in the sleep state.

According to a fifth aspect, this application provides a communication system. The communication system includes a first device and a second device. The first device is configured to: query a running status of a first application on the first device before the first device enters a sleep state; store application status information, where the application status information includes a correspondence between an identifier of the first application and the running status of the first application; and send the application status information to the second device when the first device is in the sleep state, to enable the second device to determine the running status of the first application. The second device is configured to: receive the application status information sent by the first device; store the application status information; and query the stored application status information when the second device is in a sleep state, to determine the running status of the first application.

With reference to the fifth aspect, in some embodiments, the first device is configured to broadcast the application status information to the second device when the first device is in the sleep state. The second device is configured to: when the second device is in the sleep state, receive the application status information broadcast by the first device; and update the stored application status information.

With reference to the fifth aspect, in some embodiments, the first device is further configured to: when the first device is in the sleep state, in response to a request of the second device for querying a status of a second application, query and store application status information to obtain the status of the second application; and send a running status of the second application to the second device. The second device is further configured to: send a request for querying a status of a target application to the first device when the second device is in the sleep state.

According to a sixth aspect, an embodiment of this application provides a chip. The chip is used in a device. The chip includes one or more processors. The one or more processors are configured to invoke computer instructions to enable the device to perform the method described in any one of the first aspect or the possible implementations of the first aspect, or perform the method described in any one of the second aspect or the possible implementations of the second aspect.

According to a seventh aspect, an embodiment of this application provides a computer program product including instructions. When the computer program product runs on a device, the device is enabled to perform the method described in any one of the first aspect or the possible implementations of the first aspect, or perform the method described in any one of the second aspect or the possible implementations of the second aspect.

According to an eighth aspect, an embodiment of this application provides a computer-readable storage medium including instructions. When the instructions are run on a device, the device is enabled to perform the method described in any one of the first aspect or the possible implementations of the first aspect, or perform the method described in any one of the second aspect or the possible implementations of the second aspect.

It may be understood that the device provided in the third aspect, the device provided in the fourth aspect, the chip provided in the sixth aspect, the computer program product provided in the seventh aspect, and a computer storage medium provided in the eighth aspect are all configured to perform the method provided in the embodiments of this application. Therefore, for beneficial effects that can be achieved by the devices, the chip, the computer program product, and the computer storage medium, reference may be made to beneficial effects in the corresponding method. Details are not described herein again.

In this application, based on implementations according to the foregoing aspects, the implementations may further be combined to provide more implementations.

### BRIEF DESCRIPTION OF DRAWINGS

To describe the technical solutions in embodiments of this application or the background more clearly, the following describes the accompanying drawings used in embodiments of this application or the background.
FIG. 1 is a schematic diagram of an application scenario according to an embodiment of this application;
FIG. 2 is a schematic diagram of another application scenario according to an embodiment of this application;
FIG. 3a is a schematic diagram of querying a running status of an application on another device in the conventional technology;
FIG. 3b is a schematic diagram of querying a running status of an application on another device according to an embodiment of this application;
FIG. 3c is another schematic diagram of querying a running status of an application on another device according to an embodiment of this application;
FIG. 4 is a schematic diagram of another application scenario according to an embodiment of this application;
FIG. 5 is a schematic diagram of an architecture of a communication system according to an embodiment of this application;
FIG. 6 is a schematic diagram of a hardware structure of a device according to an embodiment of this application;
FIG. 7 is a flowchart of synchronizing running status information of an application according to an embodiment of this application;
FIG. 8a and FIG. 8b are schematic diagrams of application code according to an embodiment of this application; and
FIG. 9A, FIG. 9B, and FIG. 9C are a schematic diagram of a device described in an embodiment in FIG. 6 and cooperative interaction between components in the device described in the embodiment in FIG. 6 according to an embodiment of this application.

### DESCRIPTION OF EMBODIMENTS

Terms used in embodiments of this application are merely used to explain specific embodiments of the present invention, but are not intended to limit the present invention.

The following clearly and completely describes the technical solutions in embodiments of the present invention with reference to the accompanying drawings in embodiments of the present invention. It is clear that the described embodiments are merely a part rather than all of embodiments of the present invention. Based on embodiments of the present invention, all other embodiments obtained by a person of ordinary skill in the art without a creative effort fall within the protection scope of the present invention.

It should be understood that, when used in the specification and the appended claims, the terms "include" and "contain" indicate presence of the described features, entireties, steps, operations, elements, and/or components, but does not exclude presence or addition of one or more other features, entireties, steps, operations, elements, components, and/or sets thereof.

It should be further understood that the terms used in the specification of the present invention are merely for the purpose of describing specific embodiments, but are not intended to limit the present invention. As used in the specification and the appended claims of the present invention, terms "a", "one", and "the" of singular forms are intended to include a plural form, unless otherwise specified in the context clearly.

It should be further understood that the term "and/or" used in the specification and the appended claims of the present invention refers to any combination and all possible combinations of one or more associated listed items, and includes these combinations.

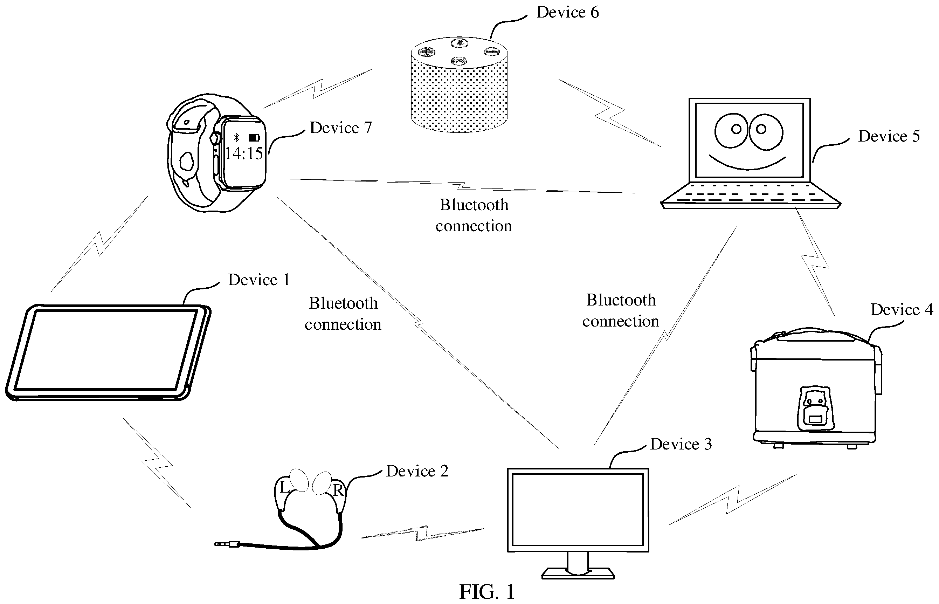

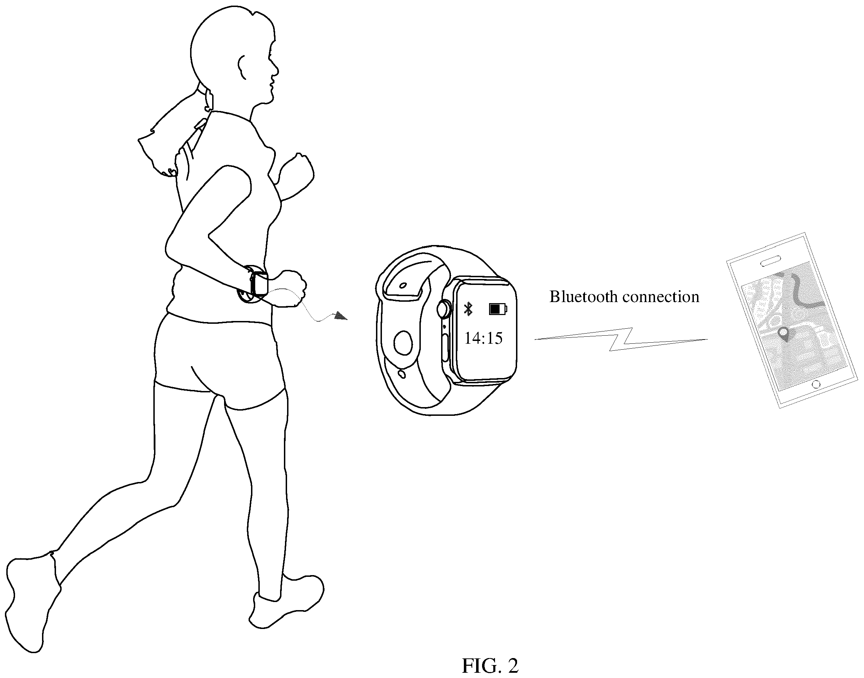

First, an application scenario in this application is described with reference to FIG. 1 and FIG. 2.

FIG. 1 is a schematic diagram of an example of an application scenario according to an embodiment of this application. As shown in FIG. 1, there may be a wireless communication connection, for example, a Wi-Fi connection, between devices 1 to 7, to implement data communication between the devices 1 to 7. Any two of the devices 1 to 7 may further be connected through Bluetooth, to implement data communication between any two devices. For example, the device 7 and the device 3 may be connected through Bluetooth, the device 7 and the device 5 may also be connected through Bluetooth, and the device 3 and the device 5 may also be connected through Bluetooth. A Bluetooth connection scenario shown in FIG. 1 is merely an example for description. In another implementation, any two of the devices 1 to 7 may be connected through Bluetooth. Details are not listed one by one in this embodiment of this application. The devices shown in FIG. 1 are merely examples for description. In another implementation, there may be another device. This is not limited in this application.

In this embodiment of this application, one or more same applications may be installed on at least any two of the devices 1 to 7. For example, a same music application is installed on both a smartphone and a smart speaker. A user needs the smart speaker to play music when using the smartphone to listen to music. In this case, the music application on the smartphone needs to be aware of a running status of the music application on the smart speaker. If the running status of the music application on the smart speaker is an active state, the smartphone may send music data in the music application on the smartphone to the music application on the smart speaker, and the smart speaker may play music on the smartphone.

For example, as shown in FIG. 2, a user wears a wearable device to run. There may be a wireless communication connection between the wearable device and the smartphone. A sports and health application is installed on both the smartphone and the wearable device. The sports and health application on the wearable device records a quantity of movement steps of the user. The wearable device enters a sleep state after recording the quantity of movement steps. For example, the user takes off the wearable device or the wearable device is charging. When the smartphone needs to obtain movement data on the wearable device, the smartphone needs to first query a running status of the sports and health application on the wearable device. If the running status of the sports and health application on the wearable device is an active state, the smartphone may directly initiate a query about the movement data to the wearable device. If the running status of the sports and health application on the wearable device is the sleep state, the smartphone may not first query sports and health data, wait until the wearable device enters the active state, and then obtain the movement data.

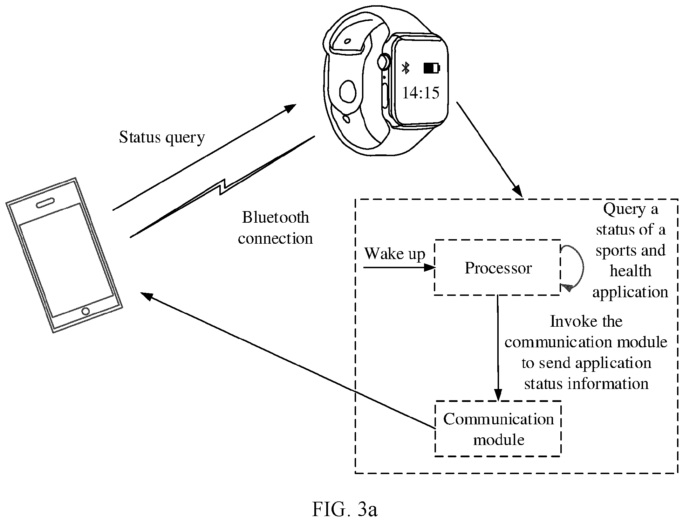

As shown in FIG. 3a, in the conventional technology, when the wearable device is in the sleep state, the smartphone sends a query instruction to the wearable device. The query instruction includes querying the running status of the sports and health application. After the wearable device receives the query instruction, the wearable device needs to first wake up a main processor; and then the main processor queries a current running status of the sports and health application, and finally invokes a communication module to send the running status of the sports and health application on the wearable device to the smartphone. In this way, the wearable device needs to wake up the main processor and then query the current running status of the application. This causes great power consumption overheads.

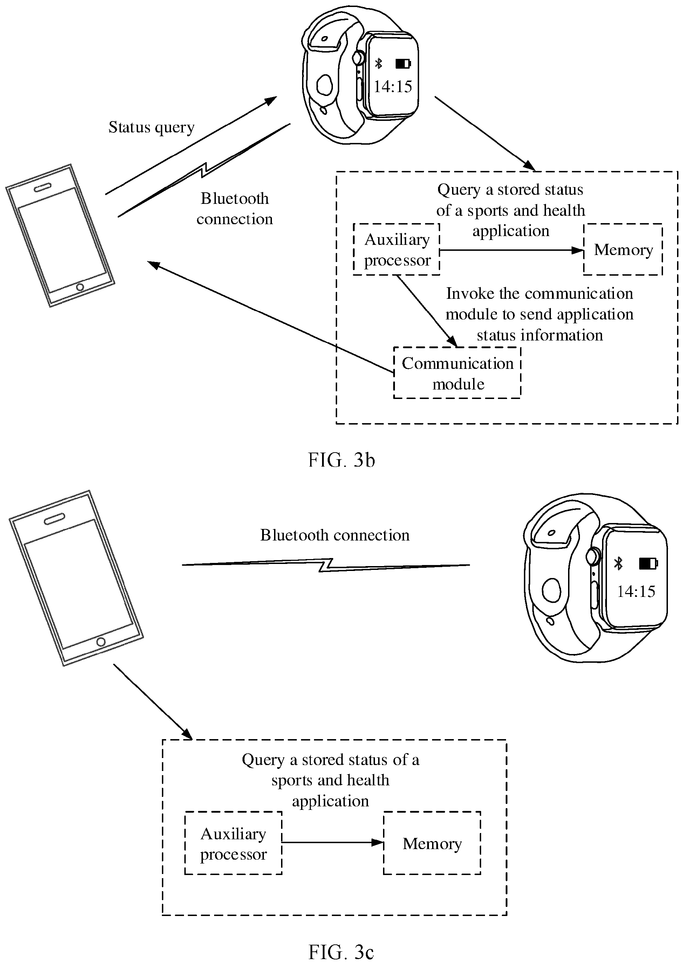

However, in this embodiment of this application, as shown in FIG. 3b, when the wearable device is in the sleep state, the smartphone sends the query instruction to the wearable device. The query instruction includes querying the running status of the sports and health application. After the wearable device receives the query instruction, the wearable device may directly query application status information in a memory by using an auxiliary processor to obtain the running status of the sports and health application, and then send the running status of the sports and health application on the wearable device to the smartphone by using the communication module. In this embodiment of this application, there is no need to wake up the main processor of the wearable device, and the main processor of the wearable device does not need to query the current running status of the sports and health application. Therefore, power consumption overheads of a system can be greatly reduced.

In addition, in some other embodiments of this application, as shown in FIG. 3c, before the wearable device enters the sleep state, the running status of the sports and health application is synchronized to the smartphone and is stored in a memory of the smartphone. Therefore, when the smartphone needs to query the running status of the sports and health application, the smartphone may directly perform querying in the memory by using the auxiliary processor, and does not need to send a query request to the wearable device. In this way, when the smartphone needs to query the running status of the sports and health application on the wearable device, the smartphone does not need to send the query request to the wearable device each time, and can directly query the latest running state of the application on the wearable device from the smartphone. This greatly reduces the power consumption overheads of the system, and saves network resources.

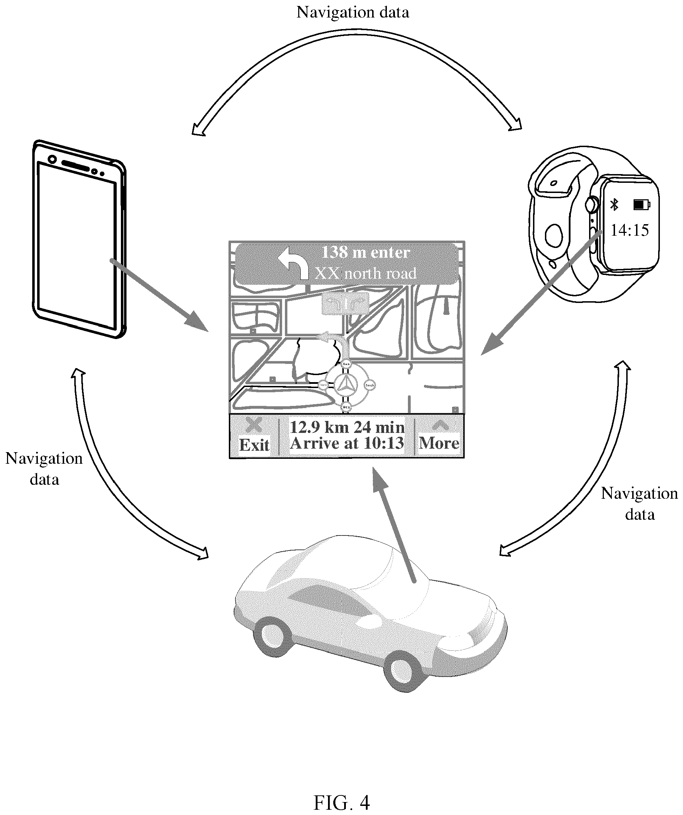

In some other scenarios in this application, one or more same applications are installed on a plurality of devices. FIG. 4 is a schematic diagram of an example of another application scenario according to an embodiment of this application. In a travel scenario shown in FIG. 4, a smartphone, a wearable device, and a vehicle-mounted device form a hyper terminal. A navigation application is installed on the hyper terminal (namely, the smartphone, the wearable device, and the vehicle-mounted device). The navigation application may collect navigation data. There may be a wireless communication connection, for example, a Wi-Fi connection, between the smartphone, the wearable device, and the vehicle-mounted device, to implement navigation data transmission between the smartphone, the wearable device, and the vehicle-mounted device. When walking, the user may use the smartphone for navigation. When the user gets on a vehicle, navigation using the smartphone may be switched to navigation using the vehicle-mounted device. When the user gets off the vehicle, the navigation using the vehicle-mounted device may further be switched to navigation using the wearable device. In a process of switching from the navigation using the smartphone to the navigation using the vehicle-mounted device, and then switching to the navigation using the wearable device, the navigation data needs to be transmitted in real time. Therefore, the smartphone, the vehicle-mounted device, and the wearable device need to be aware of a running status of the navigation application in real time. If the running status of the navigation application on the vehicle-mounted device is an active state in a process in which the navigation using the smartphone is switched to the navigation using the vehicle-mounted device, the smartphone directly transmits the navigation data to the vehicle-mounted device. If the running status of the navigation application on the vehicle-mounted device is the sleep state, the smartphone needs to first wake up the main processor of the vehicle-mounted device; and then the main processor wakes up the navigation application, and performs navigation data transmission after the navigation application is in the active state.

The following describes a communication system provided in an embodiment of this application.

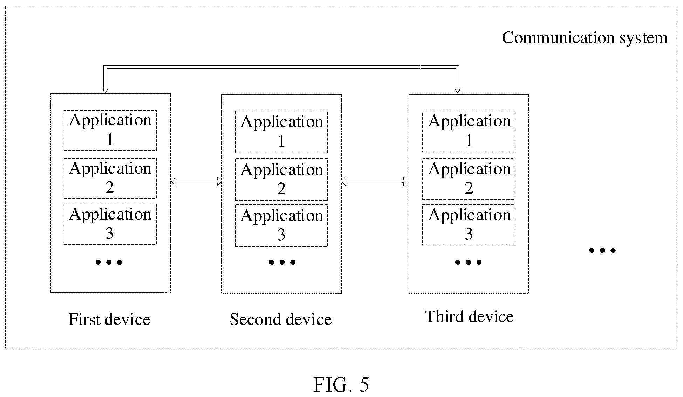

FIG. 5 shows an example of a communication system according to an embodiment of this application. As shown in FIG. 5, the system includes a plurality of devices including a first device, a second device, and a third device. There may be wired or wireless communication between the plurality of devices, to implement data communication between the plurality of devices. The plurality of devices may correspond to the foregoing devices 1 to 7. One or more same applications may be installed on at least any two of the plurality of devices. For example, the first device may be but is not limited to a mobile phone, a tablet computer, a desktop computer, a laptop computer, a notebook computer, an ultra-mobile personal computer (ultra-mobile personal computer, UMPC), a handheld computer, a netbook, a personal digital assistant (personal digital assistant, PDA), a wearable device (for example, a smart watch, smart glasses, and a head-mounted device), a virtual reality device, a smart home device (for example, a smart speaker, a smart television, a smart rice cooker, a smart refrigerator, or a smart sweeping robot), an in-vehicle infotainment device (a vehicle-mounted device and an event data recorder), and another device.

It may be understood that, in this embodiment of this application, a plurality of devices, in the communication system, on which a same application runs and that cooperatively work may be considered to form a hyper terminal. The same application on the plurality of devices may be different versions of the application. For example, the version may be a mobile phone version, an in-vehicle infotainment version, a watch version, or a tablet version. In actual application, the version may be another version. This is not limited in this application.

The following uses two devices: a first device and a second device as an example to describe the communication system provided in this embodiment of this application.

In this embodiment of this application, one or more same applications run on both the first device and the second device. The same application running on the first device and the second device may be different versions of the application. For example, the version may be the mobile phone version, the in-vehicle infotainment version, or the watch version. The application may be an application 1, an application 2, and an application 3. When the second device needs to obtain a running status of the application on the first device, there may be the following two cases.

In a first case, the first device broadcasts running status information of the application.

Specifically, the first device broadcasts the application status information of the first device to the second device. Correspondingly, the second device may receive the application status information broadcast by the first device to obtain the running status corresponding to the application on the first device, and store the application status information of the application. In a specific implementation, the first device may regularly perform broadcasting, for example, the first device broadcast to the second device once every one minute. Alternatively, the first device may broadcast to the second device only when a preset condition is met.

In a second case, the second device queries the application status information.

Specifically, the querying the application status information may include two cases. In a first case, the second device initiates a query about the running status of the application to the first device. For example, the second device wants to query a running status of the application 1 on the first device, and the first device receives a query request, and may return the running status of the application 1 to the second device. In a second case, before querying the running status of the application, the second device has received the application status information sent by the first device, and stores the application status information of the first device. In this case, the second device does not need to initiate a query about a status of the application to the first device, and only needs to query the application status information stored in the second device. In a specific implementation, the second device may regularly query the running status of the application from the first device, for example, query the first device once every one minute. Alternatively, the second device may initiate the query to the first device only when a preset condition is met.

The following describes an example of a hardware structure of a device in a communication system in an embodiment of this application.

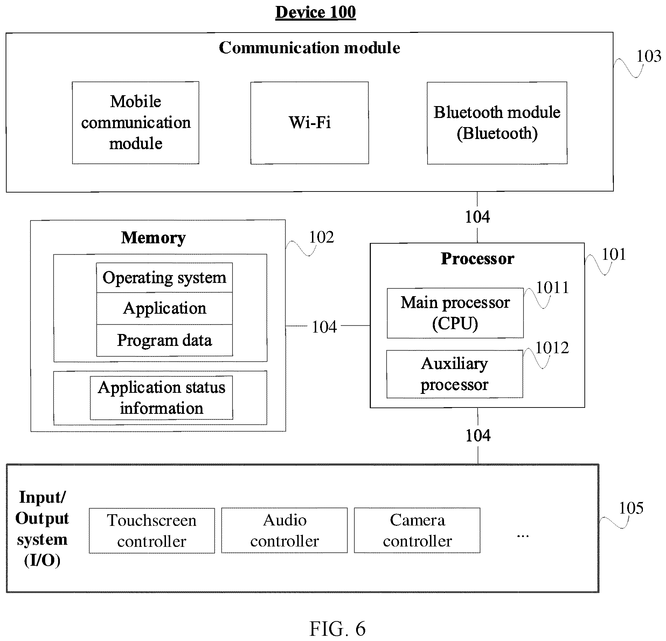

FIG. 6 is an example of a schematic diagram of a structure of a device 100. The device 100 may include a processor 101, a memory 102 (one or more computer-readable storage media), a communication module 103, and an input/output system 105. These components may communicate on one or more communication buses 104.

The processor 101 may include one or more central processing units, a clock module, and a power management module in an integrated manner. The clock module is mainly configured to generate, for the processor 101, a clock that is required for data transmission and time sequence control. The power management module is mainly configured to provide a stable and high-precision voltage for the processor 101, the communication module 103, the input/output system 105, and the like.

The processor 101 may include a main processor 1011 and an auxiliary processor 1012.

The main processor 1011 may include but is not limited to the central processing unit (central processing unit, CPU) or a graphics processing unit (graphics processing unit, GPU). Alternatively, the main processor may be a single-core processor or a multi-core processor. The main processor may be a combination of the CPU and a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), generic array logic (generic array logic, GAL), or any combination thereof. Alternatively, the main processor may be independently implemented by using a logic device with built-in processing logic, for example, the FPGA or a digital signal processor (digital signal processor, DSP).

The main processor 1011 may invoke program code stored in the memory 102 to perform the following operations:
when the main processor 1011 is in an active state, querying a running status of an application on the device, generating application status information based on the running status of the application, and storing the application status information in an auxiliary memory; and
when the main processor 1011 switches from the active state to a sleep state, updating the application status information in the auxiliary memory.

The auxiliary processor 1012 may be a sensor hub (sensor hub), and may include but is not limited to low-power consumption processing modules or processing circuits such as a low-power consumption application processor (application processor, AP), a coprocessor (coprocessor), and a low-power consumption microprocessor (micro-programmed control unit, MCU). The low-power consumption processing modules or processing circuits are mainly connected in a low power consumption manner and process data from various sensor devices in the low power consumption manner.

The auxiliary processor 1012 may invoke the program code stored in the memory 102 to perform the following operation:
when the main processor is in the sleep state, accessing the application status information stored in the auxiliary memory to obtain the application status information. The auxiliary processor 1012 may further process communication-related data. For example, the auxiliary processor 1012 is coupled to the communication module 103 to indicate the communication module 103 to broadcast the application status information to another device. For another example, the auxiliary processor 1012 may indicate the communication module 103 to send a request for querying the application status information to another device. The auxiliary processor 1012 is coupled to the memory 102 to update the application status information in the memory 102.

The main processor 1011 and the auxiliary processor 1012 may be independent devices, or may be integrated into one or more processors.

The communication module 103 is configured to receive and send a wireless signal, and mainly integrates a receiver and a transmitter of a first device 100. In a specific implementation, the communication module 103 communicates with a communication network and another communication device by using a radio frequency signal. In a specific implementation, the communication module 103 may include but is not limited to a mobile communication module (for example, a 4G module or a 5G module), a wireless fidelity (wireless fidelity, Wi-Fi) module, a Bluetooth module, and the like. In a specific implementation, the Wi-Fi module and the Bluetooth module may separately be configured to establish a communication connection such as a Wi-Fi communication connection or a Bluetooth communication connection with another communication device, for example, a second device 200, to implement short-distance data communication (as shown in FIG. 1). In some embodiments, the communication module 103 may be implemented on a separate chip. The communication module 103 is configured to receive data or send data based on an instruction of the main processor 1011 or the auxiliary processor 1012.

The memory 102 is coupled to the processor 101, and is configured to store various software programs and/or a plurality of groups of instructions. In a specific implementation, the memory 102 may include a high-speed random access memory, and may alternatively include a non-volatile memory, for example, one or more disk storage devices, a flash device, or another non-volatile solid-state storage device. The memory 102 may store an operating system (briefly referred to as a system below), for example, an embedded operating system such as ANDROID, IOS, WINDOWS, or LINUX. The memory 102 may further store a network communication program. The network communication program may be used to communicate with one or more terminal devices, for example, the second device. The memory 102 may further store a user interface program. The user interface program may vividly display content of the application by using a graphical operation interface, and receive a control operation of a user for the application by using an input control such as a menu, a dialog box, or a key. In this embodiment of this application, the memory 102 may store the application status information.

The communication bus 104 may be a peripheral component interconnect (peripheral component interconnect, PCI) bus, an extended industry standard architecture (extended industry standard architecture, EISA for short) bus, or the like. The bus 1140 may be classified into an address bus, a data bus, a control bus, and the like. For ease of representation, only one bold line is used to represent the bus in FIG. 6, but this does not indicate that there is only one bus or only one type of bus.

The input/output system 105 is mainly configured to implement a function of interaction between the device 100 and a user/an external environment, and mainly includes an input/output apparatus of the device 100. In a specific implementation, the input/output system 105 may include a touchscreen controller, a camera controller, an audio controller, and the like. Each controller may be coupled to a corresponding peripheral device (a touchscreen, a camera, or an audio circuit). It should be noted that the input/output system 105 may further include another I/O peripheral.

It may be understood that the device 100 shown in FIG. 6 may be the device described in all the foregoing content. The structure shown in this embodiment of the present invention does not constitute a specific limitation on the device 100. In some other embodiments of this application, the device 100 may include more or fewer components than those shown in the figure, or combine some components, or split some components, or have different component arrangements. The components shown in the figure may be implemented by using hardware, software, or a combination of software and hardware. It may be understood that the structure shown in this embodiment does not constitute a specific limitation on the communication system.

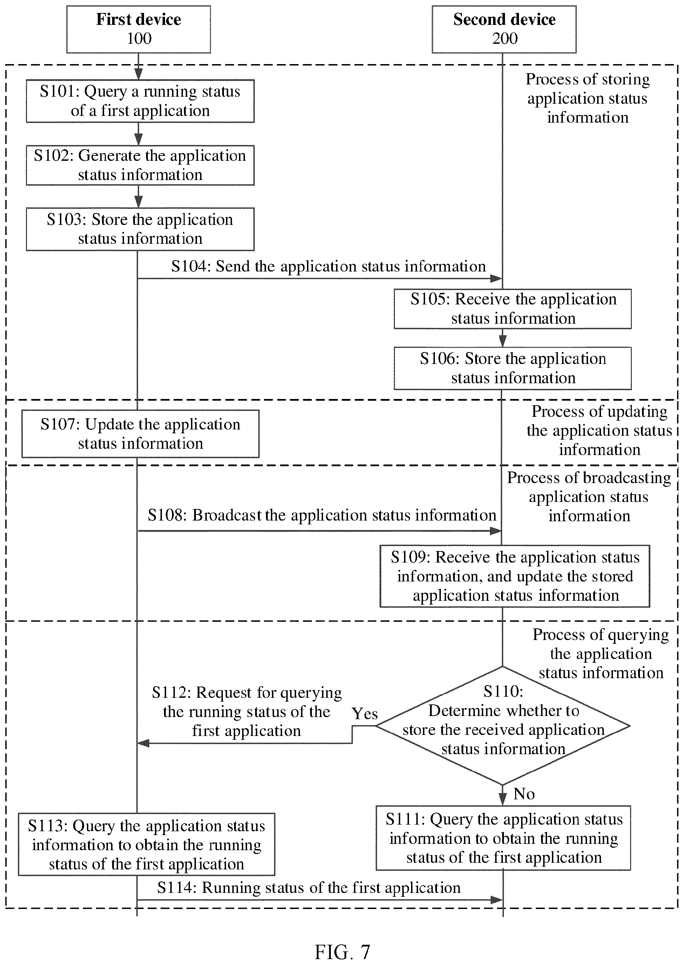

With reference to a communication system shown in FIG. 6, the following specifically describes an application status awareness method provided in an embodiment of this application. FIG. 7 is a schematic flowchart of an application status awareness method according to an embodiment of this application. As shown in FIG. 7, the application status awareness method includes steps S101 to S114.

In the application status awareness method provided in this embodiment of this application, first, when a first device is in an active state, the first device may query a running status of an application on the first device, and store application status information in a memory. After the application status information is stored, the first device may obtain the running status of the application by querying the application status information in the memory. Then, before the first device enters the sleep state, the first device re-queries the running status of the application on the first device, and updates the stored application status information, so that the application status information stored in an application memory is the running status of the application on the first device when the first device is in the sleep state. Finally, the first device may broadcast the application status information of the first device to a second device after the first device enters the sleep state, and the first device may also query the running status of the application on the second device from the second device.

In this embodiment of this application, the application status awareness method includes two phases: a first phase (steps S101 to S107), namely, a phase for storing application status information, and a second phase (steps S108 to S114), namely, a phase for performing application status awareness.

Steps S101 to S106 describe a process of storing the application status information. Step S107 describes a process of updating the application status information. Steps S108 and S109 describe a process of broadcasting the application status information. Steps S110 to S114 describe a process of querying the application status information. The following provides descriptions separately.
(1) Steps S101 to S106: Store the application status information.

S101: The first device queries a running status of a first application on the first device.

A running status of an application includes at least a sleep state and an active state. The application that is in the sleep state does not process operations such as data transmission. For example, when a smartphone needs to obtain data in a sports and health application on a wearable device, and the sports and health application is in the sleep state, the smartphone cannot obtain the data in the sports and health application on the wearable device. The first device may include one or more applications. The first device may query all the applications on the first device, and may also query a preset application on the first device. This is not limited in this application.

S102: The first device generates the application status information.

Specifically, the first device may generate the application status information according to a preset rule after querying the running status of the first application. The application status information includes a correspondence between an identifier of the first application and the running status of the first application. The application status information may be represented in a form of application code or an application status table. Different representation forms correspond to different rules for generating the application status information. In a specific implementation, the application status information may further be represented in another form. This is not limited in this application.

Optionally, the first device encodes the first application and the running status of the first application according to a preset rule to generate the application code to indicate the correspondence between the identifier of the first application and the running status of the first application. The application code may include first sub-code and second sub-code. The first sub-code corresponds to the running status of the first application and indicates the running status of the first application. The second sub-code corresponds to the first application and indicates the first application.

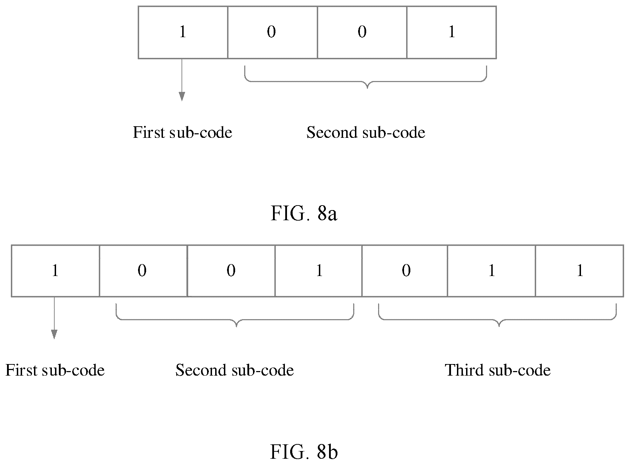

For example, the application code may be encoded by a 4-bit binary number that includes two pieces of sub-code. As shown in FIG. 8a, the first sub-code may be composed of a 1-bit binary number and indicates the running status of the application. For example, 0 represents the sleep state, and 1 represents the active state. The second sub-code may be composed of a 3-bit binary number and indicates the identifier of the application. The 3-bit binary number may be combined to represent 8 applications. In a specific implementation, based on a quantity of applications, the second sub-code may have more or fewer bits to indicate more or fewer applications. For example, 001 represents an application 1, 010 represents an application 2, and 011 represents an application 3. Encoding of the application and the status corresponding to the application may be as shown in Table 1.

**Table 1**

| Application | Status | Code |
|---|---|---|
| Application 1 | Active | 1001 |
| Application 2 | Active | 1010 |
| Application 3 | Sleep | 0011 |

It should be noted that Table 1 is merely an implementation provided in this embodiment of this application, and shall not constitute a limitation.

Optionally, in this embodiment of this application, the application code may further include third sub-code that indicates an identifier of a device. As shown in FIG. 8b, the third sub-code may be encoded by the 3-bit binary number. The 3-bit binary number may be combined to represent 8 devices. For example, 001 may represent a device 1. Application code 1001001 may represent that the running status of the application 1 on the device 1 is the active state.

The application code provided in this embodiment of this application may be represented in another form, for example, octal, decimal, or hexadecimal. According to actual application, the code has more or fewer bits, for example, may be represented by using 16 bits or 8 bits. Alternatively, for the status of the application, 1 may represent the sleep state, 0 may represent the active state, and the like. The application code provided in this embodiment of this application is merely an example, and shall not constitute a limitation on this application.

Optionally, the first device generates the application status table based on the application and the running status of the application. The application status table includes the correspondence between the identifier of the first application and the running status of the first application.

For example, the application status table may include the identifier of the application (for example, a name of the application) and the running status of the application (for example, the active state or the sleep state). For example, the application status table may be as shown in Table 2.

**Table 2**

| Application | Version | Status |
|---|---|---|
| Application 1 | V1.1 | Active |
| Application 2 | V1.2 | Active |
| Application 3 | V1.2 | Sleep |

It should be noted that Table 2 is merely an implementation provided in this embodiment of this application, and shall not constitute a limitation.

Optionally, the application status table may further include an application status bit. The application status bit encodes the application according to the preset rule to indicate the application. The application status bit includes a plurality of sub-status bits. The plurality of sub-status bits are in a one-to-one correspondence with a plurality of applications. The first status bit is one of the plurality of sub-status bits. The first status bit includes a first sub-status bit. The first sub-status bit corresponds to the first application.

For example, the application status bit may be represented by a 16-bit binary number. The 16-bit binary number represents 16 sub-status bits. The 16 sub-status bits may be in a one-to-one correspondence with 16 applications. For example, a 16-bit binary number 0000 0000 0000 0001 may represent the application 1, and a 16-bit binary number 0000 0000 0000 0010 may represent the application 2. The application status bit provided in this embodiment of this application is merely an example, and shall not constitute any limitation on this embodiment of this application. The application status bit in this embodiment of this application may also be represented in another encoding manner. This is not limited in this application. For example, the application status table may be as shown in Table 3.

**Table 3**

| Application | Version | Status | Status bit |
|---|---|---|---|
| Application 1 | V1.1 | Active | 0000 0000 |
| | | | 0000 0001 |
| Application 2 | V1.2 | Active | 0000 0000 |
| | | | 0000 0010 |
| Application 3 | V1.2 | Sleep | 0000 0000 |
| | | | 0000 0100 |

It should be noted that Table 3 is merely an implementation provided in this embodiment of this application, and shall not constitute a limitation. In a specific implementation, information about the application may be added based on an actual situation. This is not limited in this application.

Optionally, the application status may further include the application code. For example, the application status table may be as shown in Table 4.

**Table 4**

| Application | Version | Status | Code |
|---|---|---|---|
| Application 1 | V1.1 | Active | 1001 |
| Application 2 | V1.2 | Active | 1010 |
| Application 3 | V1.2 | Sleep | 0011 |

It should be noted that Table 4 is merely an implementation provided in this embodiment of this application, and shall not constitute a limitation. In a specific implementation, the application status table may include information about more or fewer applications. This is not limited in this application.

S103: The first device stores the application status information.

Specifically, the first device stores the generated application status information in the memory before the first device enters the sleep state. The stored application status information may be represented in a plurality of forms. For example, the application status table shown in Table 3 may be stored. To query the running status of the application 1, the first device only needs to query a status that is recorded in the application status table and that corresponds to the application 1. There is no need to query the running status of the application 1 on the first device, so that power consumption of the first device may be reduced.

S104: The first device sends the application status information to the second device.

Specifically, the first device sends the stored application status information to the second device before the first device enters the sleep state.

S105: The second device receives the application status information sent by the first device.

S106: The second device stores the application status information sent by the first device.

In this embodiment of this application, the application status information of the first device is sent to the second device, and the second device stores the application status information sent by the first device. When the second device needs to acquire the running status of the application on the first device, the second device only needs to query the application status information that is stored in an auxiliary memory and that is sent by the first device, and does not need to initiate a query about the running status of the application to the first device and wait for the first device to return the running status of the application. This improves query efficiency, and reduces power consumption of the first device and the second device.

(2) Step S107: Update the application status information.

S107: The first device updates the stored application status information.

Specifically, the first device re-queries the running status of the first application on the first device at a first preset moment before the first device enters the sleep state, and then updates, based on the running status of the first application, the application status information stored in the first device. For example, the application code stored in the first device is 0001, and 0001 represents that the status of the application 1 is the sleep state. When the first device switches from the active state to the sleep state, the first device queries that the running status of the application 1 is the active state. The first device may update the application code stored in the first device to 1001 to indicate that the running status of the application 1 is the active state. In this way, it may be ensured that when the first device enters the sleep state, the application status information stored in the first device is the running status corresponding to the application on the first device. This prevents another device from being misled because of a fact that when the first device broadcasts the application status information, the running status that is of the application and that is stored in the first device is not a latest state.

(3) Steps S108 and S109: Broadcast the application status information.

S108: The first device broadcasts the application status information to the second device.

Specifically, the first device broadcasts the application status information to the second device at intervals of preset duration when the first device is in the sleep state. The application status information may be the application code. The first device accesses the stored application status information to obtain the application code. The first device may broadcast the application code to the second device to indicate the first application on the first device and the running status corresponding to the first application. The application status information may alternatively be the application status table shown in Table 3. The first device accesses the stored application status information to obtain an application status bit. The first device broadcasts the application status bit to the second device to indicate the second device to query the application status table stored in the second device, to obtain the running status corresponding to the application on the first device. In this way, the application code or the application status bit is broadcast, and there is no need to broadcast the entire application and the running status corresponding to the application. The encoding manner is used, so that an information transmission volume is reduced, and transmission efficiency is improved.

S109: The second device receives the application status information broadcast by the first device, and updates the application status information on the second device.

Specifically, when the second device is in the sleep state, the second device receives application status information that is of the first device and that is broadcast by the first device, and the second device updates, based on the application status information of the first device, the application status information that is of the first device and that is stored in the second device.

(4) Steps S110 to S114: Query the application status information.

S110: The second device determines whether the application status information sent by the first device is stored. If the application status information sent by the first device is stored, step S111 is performed. If the application status information sent by the first device is not stored, steps S112 to S114 are performed.

Specifically, the second device may access the stored application status information, and query whether the application status information sent by the first device is stored. To be specific, whether the second device receives and stores, before the second device enters the sleep state, the application status information sent by the first device. If the stored application status information stores the application status information sent by the first device, step S111 is performed; and if the stored application status information does not store the application status information sent by the first device, steps S112 to S114 are performed.

S111: Query the application status information to obtain the running status of the first application.

Specifically, before the second device queries the running status of the first application, the second device receives and stores the application status information sent by the first device. When the second device wants to query the running status of the first application on the first device, the second device may first access the stored application status information to obtain the application status information of the first device. Then, the application status information is parsed according to the preset rule to obtain the running status of the first application. For example, the obtained application status information is application code 1001 1010 0011. It may be known, according to a preset encoding rule, that the application code respectively represents that the running status of the application 1 is the active state, the running status of the application 2 is the active state, and the running status of the application 3 is the sleep state. If the application 1 is the first application, it may be obtained that the status of the first application is the active state. In this way, when the second device needs to query the running status of the first application on the first device, the second device only needs to query the application status information stored in the second device, does not need to send a request for querying the running status to the first device to wake up the first device to: query a current running status of the first application on the first device and then invoke a communication interface to send the current running status to the second device. This greatly reduces power consumption overheads of the device.

S112: The second device sends a request for querying the status of the first application to the first device.

S113: The first device queries the application status information to obtain the status of the first application.

Specifically, after the first device queries the stored application status information in response to the request of the second device for querying the running status of the first application, the first device may parse the application status information according to the preset rule to obtain the running status of the first application. For a specific operation of parsing the application status information, refer to a related operation of the first device in S108. Details are not described herein again.

S114: The first device sends the running status of the first application to the second device.

Optionally, the first device may further send application status code to the second device, and the second device parses the application status code to obtain the running status of the first application.

Optionally, the foregoing embodiment is described by using an example in which in the second phase, both the first device and the second device are in the sleep state. In a specific implementation, in the second phase, the first device and/or the second device may be in a non-sleep state.

It should be noted that related operations of the first device may be performed by the second device, or may be performed by a third device. Correspondingly, related operations of the second device may be performed by the first device, or may be performed by the third device. This is not limited in this application.

It should be noted that for brief description, the foregoing method embodiments are described as a series of actions. However, a person skilled in the art should understand that the present invention is not limited by the described action sequence. In addition, a person skilled in the art should also understand that the embodiments described in this specification are all preferred embodiments, and the related actions are not necessary for the present invention.

With reference to the device shown in FIG. 6, the following describes the device in an embodiment of FIG. 7 and a cooperation relationship between components in the device in this embodiment of this application.

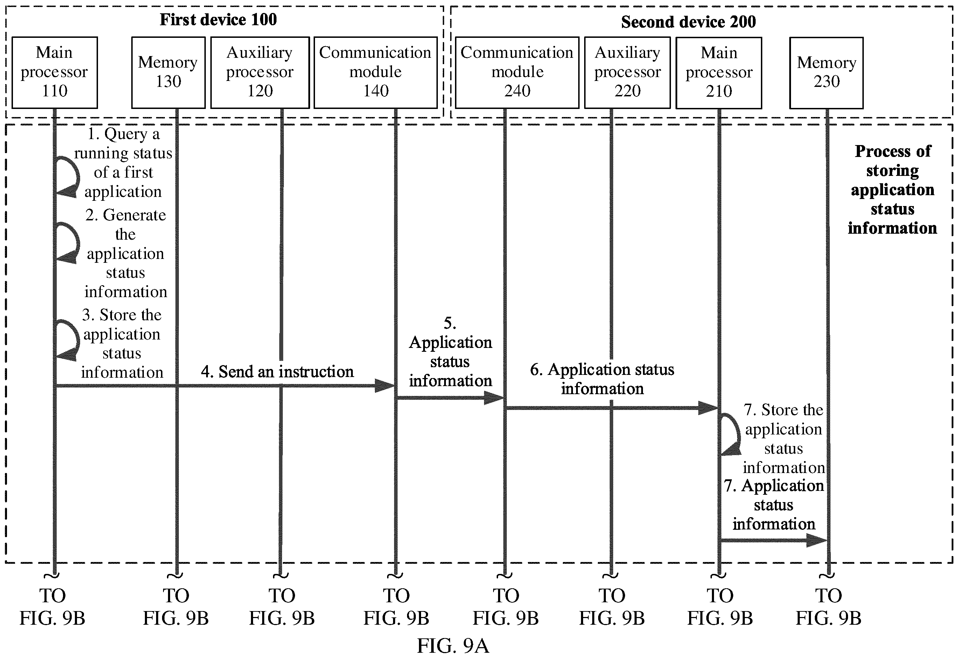

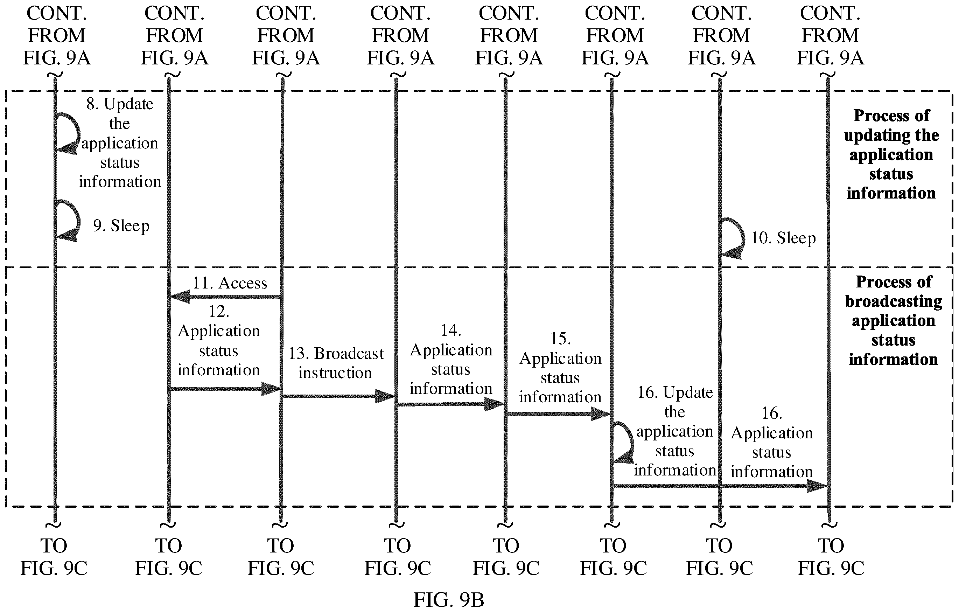

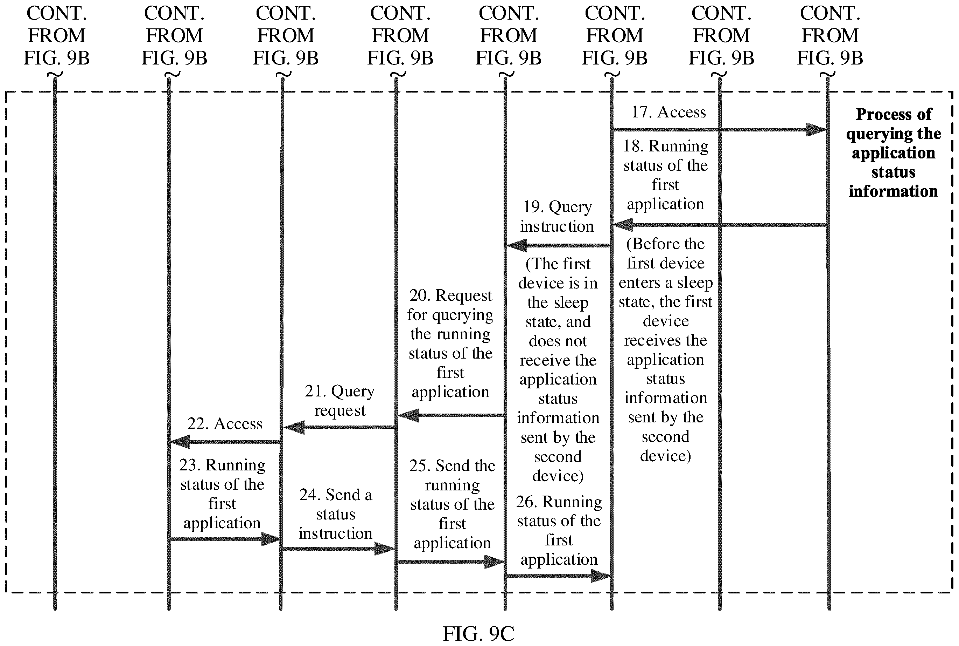

FIG. 9A, FIG. 9B, and FIG. 9C show an example of a cooperation relationship between components of a first device 100 and components of a second device 200 in this embodiment of this application. As shown in FIG. 9A, FIG. 9B, and FIG. 9C, the first device 100 includes: a main processor 110, an auxiliary processor 120, a memory 130, and a communication module 140. Correspondingly, the second device 200 includes: a main processor 210, an auxiliary processor 220, a memory 230, and a communication module 240. In the embodiment of FIG. 7, an example in which both the main processor of the first device 100 and the main processor of the second device 200 are in a sleep state when the first device 100 and the second device 200 perform application status awareness is used, and the following provides specific description.

(1) Steps 1 to 7: Store application status information.

Steps 1 to 4: The main processor 110 queries a running status of a first application, and generates the application status information. The main processor 110 stores the application status information in the memory 130 after generating the application status information, and sends an instruction to the communication module 140 to instruct the communication module 140 to send the application status information to the second device 200. Specifically, for a process of generating the application status information, refer to the related operation in step S102 in the embodiment of FIG. 7. Details are not described herein again.

Step 5: In response to the instruction sent by the main processor, the communication module 140 sends the application status information to the second device 200.

Step 6: The communication module 240 receives the application status information sent by the communication module 140, and sends the application status information to the main processor 210.

Step 7: The main processor 210 stores the application status information in the memory 230.

(2) Steps 8 to 10: Update the application status information.

Step 8: The main processor 110 updates the application status information. Specifically, for a related operation of updating the application status information by the main processor 110, refer to the related operation in step S107 in the embodiment of FIG. 7. Details are not described herein again.

Steps 9 and 10: The main processor 110 and the main processor 210 enter the sleep state.

(3) Steps 11 to 16: Broadcast the application status information.

Steps 11 to 13: The auxiliary processor 120 accesses the application status information in the memory 130, and sends a broadcast instruction to the communication module 140 to instruct the communication module 140 to broadcast the application status information to the second device 200.

Step 14: In response to the broadcast instruction of the auxiliary processor 110, the communication module 140 broadcasts the application status information to the second device 200.

Step 15: The communication module 240 receives the application status information, and sends the application status information to the auxiliary processor 210.

Step 16: The auxiliary processor 220 updates the application status information in the memory 230. Specifically, for a related operation of updating the application status information in the memory 230 by the auxiliary processor 210, refer to the embodiment of FIG. 7. Details are not described herein again.

(4) Steps 17 to 26: Query the application status information.

Steps 17 and 18: The auxiliary processor 220 accesses the application status information in the memory 230 to obtain the running status of the first application. Specifically, for a related operation, refer to the related operation in step S111 in the embodiment of FIG. 7. Details are not described herein again.

Step 19: The auxiliary processor 220 sends a query instruction to the communication module 240 to instruct the communication module 240 to send a request for querying the running status of the first application to the first device 100.

Step 20: In response to the query instruction of the auxiliary processor 220, the communication module 240 sends a query request for querying the running status of the first application to the first device 100.

Step 21: The communication module 140 receives the request for querying the running status of the first application, and sends the request for querying the running status of the first application to the auxiliary processor 120.

Steps 22 to 24: The auxiliary processor 120 accesses the memory 130 to obtain the running status of the first application, and sends a status instruction to the communication module 140 to instruct the communication module 140 to send the running status of the first application to the second device 200. Specifically, for a related operation, refer to the related operation in step S112 in the embodiment of FIG. 7. Details are not described herein again.

Step 25: In response to a sending instruction of the auxiliary processor 120, the communication module 140 sends the running status of the first application to the second device 200.

Step 26: The communication module 240 receives the running status of the first application, and sends the running status to the auxiliary processor 220.

Optionally, in the foregoing steps 22 to 24, the auxiliary processor 120 of the first device 100 may send an instruction to the communication module 140 after querying the running status of the application to instruct the communication module 140 to send the application status information to the second device 200. In step 26, the communication module 240 of the second device 200 receives the application status information, and the auxiliary processor 220 of the second device 200 parses the application status information to obtain the running status of the first application.

It should be noted that, in the foregoing embodiment, that the main processor 110 and the main processor 210 are in the sleep state is merely an example for description. In this embodiment of this application, in a process of being aware of the running status of the application, the main processor 110 and/or the main processor 210 may also be in a non-sleep state. When the main processor 110 is in the non-sleep state, the related operations of the auxiliary processor 120 in steps 11 to 13 and 22 to 24 in the foregoing embodiment may be performed by the main processor 110. When the main processor 210 is in a non-sleep state, the related operations of the auxiliary processor 220 in steps 16 to 19 in the foregoing embodiment may be executed by the main processor 210.

Optionally, in steps 11 to 26, the main processor 110 and the main processor 210 may be in the non-sleep state. For example, when the main processor 110 is in a high load state, the auxiliary processor 120 indicates the communication module 140 to broadcast the application status information or query the application status information. This may relieve a high load condition of the main processor 110, and improves system performance.

In this embodiment of this application, the application status information is stored before the first device enters the sleep state. When the first device is in the sleep state, and the running status of the application needs to be queried, the stored application information may be directly queried, and there is no need to wake up the main processor of the first device to query a current running status of the application. This reduces power consumption overheads of the first device. In addition, in the sleep state, the application status information may be sent to the second device by using the auxiliary processor. Before the second device enters the sleep state, the second device receives and stores the application status information sent by the first device. When the second device is in the sleep state, and the second device needs to query the running status of the application on the first device, the second device may directly query, by using the auxiliary processor, the stored application status information sent by the first device, and does not need to wake up the main processor of the second device to send the request for querying the running status of the application to the first device. This reduces power consumption overheads of the first device and the second device, and saves network resources.

The following specifically describes this embodiment of this application with reference to the application scenario shown in FIG. 2.

When a wearable device is in an active state, a sports and health application on the wearable device may record a quantity of movement steps of the user collected by a movement sensor, for example, an accelerometer, a gyroscope, or a magnetometer.

According to steps 1 to 3, a main processor of the wearable device queries a running status of the sports and health application, for example, the sports and health application is in the sleep state. The main processor of the wearable device generates application code after querying the running status of the sports and health application, and stores the application code in the memory. For example, an identifier of the sports and health application is an application 1, and the generated application code is 0001. This indicates that a running status of the application 1 is the sleep state, and 0001 is stored in the memory. According to steps 4 and 5, the wearable device sends sports and health application code 0001 to a smartphone after generating the application code. According to steps 6 and 7, the smartphone stores 0001 in a memory of the smartphone after receiving the application code 0001.

According to steps 8 to 10, before the wearable device enters the sleep state, the wearable device re-queries the running status of the sports and health application, and updates the application code 0001 in the memory. After the wearable device enters the sleep state, the smartphone wants to query the quantity of movement steps of the user recorded on the sports and health application on the wearable device, and the smartphone needs to first query the running status of the sports and health application on the wearable device. If the running status of the sports and health application on the wearable device is an active state, the smartphone may directly initiate a query about the quantity of movement steps to the sports and health application on the wearable device. If the running status of the sports and health application on the wearable device is the sleep state, the smartphone may choose not to first query the quantity of movement steps, wait until the wearable device is woken up, and then query the quantity of movement steps. The smartphone may obtain the running status of the sports and health application on the wearable device in two manners. A first manner is that the wearable device broadcasts sports and health application code. A second manner is that the smartphone queries the running status of the sports and health application.

According to steps 11 to 16, the auxiliary processor of the wearable device may access the sports and health application code stored in the memory, and may broadcast the sports and health application code 0001 to the smartphone regularly. The smartphone receives the broadcast sports and health application code 0001, and may learn that the running status of the sports and health application is the sleep state.

According to steps 17 to 26, that the smartphone queries the running status of the sports and health application includes two cases.

In a first case, if the sports and health application code 0001 is sent to the smartphone before the wearable device enters the sleep state, according to steps 17 to 18, the auxiliary processor of the smartphone may view the code 0001 stored in the memory of the smartphone to obtain the running status of the sports and health application.

In a second case, if the sports and health application code 0001 is not sent to the smartphone before the wearable device enters the sleep state, or the smartphone does not receive the sent code 0001, according to steps 19 to 26, the auxiliary processor of the smartphone may initiate a query about the running status of the sports and health application to the wearable device. The wearable device queries the sports and health application code in the memory after receiving a query request of the smartphone to obtain the running status of the sports and health application, and then sends the running status to the smartphone.

A person skilled in the art should understand that embodiments of the present invention may be provided as a method, a system, or a computer program product. Therefore, the present invention may use a form of hardware only embodiments, software only embodiments, or embodiments with a combination of software and hardware. Moreover, the present invention may use a form of a computer program product that is implemented on one or more computer-usable storage media (including but not limited to a magnetic disk memory, an optical memory, and the like) that include computer-usable program code.

The present invention is described with reference to flowcharts and/or block diagrams of the method, the device (system), and the computer program product in embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided to a general-purpose computer, a dedicated computer, an embedded processor, or a processor of another programmable data processing device to generate a machine, so that instructions executed by the computer or the processor of the another programmable data processing device generate an apparatus for implementing a function specified in one or more processes in the flowcharts and/or one or more blocks in the block diagram.

These computer program instructions may alternatively be stored in a computer-readable memory that can instruct the computer or the another programmable data processing device to work in a specific manner, so that instructions stored in the computer-readable memory generate a product that includes an instruction apparatus. The instruction apparatus implements a function specified in one or more processes in the flowcharts and/or one or more blocks in the block diagrams.

These computer program instructions may also be loaded onto a computer or another programmable data processing device, so that a series of operations and steps are performed on the computer or the another programmable device to generate computer-implemented processing. Therefore, the instructions executed on the computer or the another programmable device provide steps for implementing a function specified in one or more processes in the flowcharts and/or in one or more blocks in the block diagrams.

It is clear that a person skilled in the art may make various modifications and variations to the present invention without departing from the spirit and scope of the present invention. In this way, the present invention is intended to cover these modifications and variations provided that they fall within the scope defined by the claims of the present invention and their equivalent technologies.

## Claims

1. An application status awareness method, comprising:
querying, by a first device, a running status of a first application on the first device before the first device enters a sleep state;
storing, by the first device, application status information, wherein the application status information comprises a correspondence between an identifier of the first application and the running status of the first application; and
sending, by the first device, the application status information to a second device when the first device is in the sleep state, to enable the second device to determine the running status of the first application.

2. The method according to claim 1, wherein the first device comprises a main processor and an auxiliary processor;
the querying, by a first device, a running status of a first application on the first device before the first device enters a sleep state specifically comprises:
querying, by the auxiliary processor, the running status of the first application on the first device before the main processor enters a sleep state;
the storing, by the first device, application status information specifically comprises:
storing, by the main processor, the application status information; and
the sending, by the first device, the application status information to a second device when the first device is in the sleep state, to enable the second device to determine the running status of the first application specifically comprises:
sending, by the auxiliary processor, the application status information to the second device before the main processor enters the sleep state, to enable the second device to determine the running status of the first application.

3. The method according to claim 1 or 2, wherein the method further comprises:
updating, by the first device, the stored application status information at a first preset moment before the first device enters the sleep state.

4. The method according to any one of claims 1 to 3, wherein the running status of the application comprises at least a sleep state and an active state.

5. The method according to any one of claims 1 to 4, wherein the application status information comprises first application code; the first application code comprises first sub-code and second sub-code; the first sub-code indicates the running status of the first application; and the second sub-code indicates the first application.

6. The method according to any one of claims 1 to 4, wherein the application status information comprises an application status table, and the application status table comprises the correspondence between the identifier of the first application and the running status of the first application.

7. The method according to claim 6, wherein the application status table further comprises a first status bit, the first status bit comprises a first sub-status bit, and the first sub-status bit corresponds to the first application.

8. The method according to any one of claims 1 to 7, wherein the method further comprises:
sending, by the first device, the application status information to the second device before the first device enters the sleep state.

9. The method according to any one of claims 1 to 7, wherein the sending, by the first device, the application status information to a second device when the first device is in the sleep state specifically comprises:
broadcasting, by the first device, the application status information to the second device at intervals of preset duration when the first device is in the sleep state.

10. The method according to any one of claims 1 to 7, wherein the method further comprises:
in response to a request of the second device for querying the running status of the first application, querying, by the first device, the stored application status information to obtain a status of the first application; and
sending, by the first device, the running status of the first application to the second device.

11. An application status awareness method, comprising:
receiving, by a second device, application status information sent by a first device, wherein the application status information comprises a correspondence between an identifier of a first application on the first device and a running status of the first application;
storing, by the second device, the application status information; and
querying, by the second device, the stored application status information when the second device is in a sleep state, to determine the running status of the first application.

12. The method according to claim 11, wherein the second device comprises a main processor and an auxiliary processor;
the receiving, by a second device, application status information sent by a first device specifically comprises:
receiving, by the main processor, the application status information sent by the first device;
the storing, by the second device, the application status information specifically comprises:
storing, by the main processor, the application status information; and
the querying, by the second device, the stored application status information, to determine the running status of the first application specifically comprises:
querying, by the auxiliary processor, the stored application status information, to determine the running status of the first application.

13. The method according to claim 11 or 12, wherein the method further comprises:
when the second device is in the sleep state, receiving, by the second device, application status information that is of the first device and that is broadcast by the first device; and
updating, by the second device and based on the application status information of the first device, the application status information that is of the first device and that is stored in the second device.

14. The method according to claim 11 or 12, wherein the method further comprises:
sending, by the second device, a request for querying the running status of the first application to the first device when the second device is in the sleep state.

15. A device, wherein the device comprises: one or more processors and a memory; and
the memory is coupled to the one or more processors and is configured to store computer program code, the computer program code comprises computer instructions, and the one or more processors invoke the computer instructions to enable the device to perform the following operations:
before the device enters a sleep state, querying a running status of a first application installed on the device;
storing application status information, wherein the application status information comprises a correspondence between an identifier of the first application and the running status of the first application; and
sending, by the device, the application status information to a second device when the device is in the sleep state, to enable the second device to determine the running status of the first application.

16. The device according to claim 15, wherein the one or more processors comprise a main processor and an auxiliary processor, and the main processor is specifically configured to invoke the computer instructions to enable the device to perform the following operations:
before the main processor enters a sleep state, querying the running status of the first application installed on the device; and storing the application status information, wherein the application status information comprises the correspondence between the identifier of the first application and the running status of the first application; and
the auxiliary processor is specifically configured to invoke the computer instructions to enable the device to perform the following operation:
sending, by the auxiliary processor, the application status information to the second device when the main processor is in the sleep state, to enable the second device to determine the running status of the first application.

17. The device according to claim 15 or 16, wherein the one or more processors are further configured to invoke the computer instructions to enable the device to perform the following operation:
updating the stored application status information at a first preset moment before the device enters the sleep state.

18. The device according to any one of claims 15 to 17, wherein a running status of an application comprises at least a sleep state and an active state.

19. The device according to any one of claims 15 to 18, wherein the application status information comprises: first application code; the first application code comprises first sub-code and second sub-code; the first sub-code indicates the running status of the first application; and the second sub-code indicates the first application.

20. The device according to any one of claims 15 to 18, wherein the application status information comprises an application status table, and the application status table comprises the correspondence between the identifier of the first application and the running status of the first application.

21. The device according to any one of claims 15 to 18, wherein the application status table further comprises a first status bit, the first status bit comprises third sub-code, and the third sub-code corresponds to the first application.

22. The device according to any one of claims 15 to 21, wherein the one or more processors are further configured to invoke the computer instructions to enable the device to perform the following operation:
sending the application status information to the second device before the device enters the sleep state.

23. The device according to any one of claims 15 to 21, wherein the one or more processors are specifically configured to invoke the computer instructions to enable the device to perform the following operation:
broadcasting the application status information to the second device at intervals of preset duration.

24. The device according to any one of claims 15 to 21, wherein the one or more processors are further configured to invoke the computer instructions to enable the device to perform the following operations:
in response to a request of the second device for querying a status of the first application, querying and storing the application status information to obtain the running status of the first application; and
sending the running status of the first application to the second device.

25. A device, wherein the device comprises: one or more processors and a memory; and
the memory is coupled to the one or more processors and is configured to store computer program code, the computer program code comprises computer instructions, and the one or more processors invoke the computer instructions to enable the device to perform the following operations:
receiving application status information sent by a first device, wherein the application status information comprises a correspondence between an identifier of a first application on the first device and a running status of the first application;
storing the application status information; and
querying the stored application status information when the device is in a sleep state, to determine the running status of the first application.

26. The device according to claim 25, wherein the one or more processors comprise a main processor and an auxiliary processor, and the main processor is specifically configured to invoke the computer instructions to enable the device to perform the following operations:
before the main processor enters a sleep state, receiving the application status information sent by the first device, wherein the application status information comprises the correspondence between the identifier of the first application installed in the first device and the running status of the first application; and storing the application status information; and
the auxiliary processor is specifically configured to invoke the computer instructions to enable the device to perform the following operation:
querying the stored application status information when the main processor is in the sleep state, to determine the running status of the first application.

27. The device according to claim 25 or 26, wherein the one or more processors are further configured to invoke the computer instructions to enable the device to perform the following operations:
when the device is in the sleep state, receiving application status information that is of the first device and that is broadcast by the first device; and
updating, based on the application status information of the first device, the application status information that is of the first device and that is stored in the device.

28. The device according to claim 25 or 26, wherein the one or more processors are further configured to invoke the computer instructions to enable the device to perform the following operation:
sending a request for querying the running status of the first application to the first device when the device is in the sleep state.

29. A communication system, comprising: a first device and a second device, wherein
the first device is configured to: query a running status of a first application on the first device before the first device enters a sleep state; store application status information, wherein the application status information comprises a correspondence between an identifier of the first application and the running status of the first application; and send the application status information to a second device when the first device is in the sleep state, to enable the second device to determine the running status of the first application; and
the second device is configured to: receive the application status information sent by the first device; store the application status information; and query the stored application status information when the second device is in a sleep state, to determine the running status of the first application.

30. A chip system, wherein the chip system is applied to a device, the chip system comprises one or more processors, and the one or more processors are configured to invoke computer instructions to enable the device to perform the method according to any one of claims 1 to 10, or perform the method according to any one of claims 11 to 13.

31. A computer program product comprising instructions, wherein when the computer program product runs on a device, the device is enabled to perform the method according to any one of claims 1 to 10, or perform the method according to any one of claims 11 to 13.

32. A computer-readable storage medium, comprising instructions, wherein when the instructions are run on a device, the device is enabled to perform the method according to any one of claims 1 to 10, or perform the method according to any one of claims 11 to 13.
